# EUROPEAN PATENT SPECIFICATION

(11) **EP 3 827 515 B1**
(45) Date of publication and mention of the grant of the patent: **18.03.2026**
(21) Application number: 19841891.5
(22) Date of filing: 24.07.2019
(51) Int. Cl.: E04B 1/38, E04B 1/61, F16B 25/10, F16B 35/04, F16B 35/06, F24S 25/61, H02S 20/23

(54) **ANCHOR PLATFORM ASSEMBLY ESPECIALLY USEFUL FOR ROOF ACCESSORY STRUCTURES**
VOR ALLEM FÜR DACHZUBEHÖRSTRUKTUREN NÜTZLICHE ANKERPLATTENANORDNUNG
ENSEMBLE PLATE-FORME D'ANCRAGE PARTICULIÈREMENT UTILE POUR STRUCTURES ACCESSOIRES DE TOIT

(30) Priority: 24.07.2018 US 201862702486 P; 13.12.2018 WO PCT/US2018/065465; 19.02.2019 WO PCT/US2019/018592
(43) Date of publication of application: 02.06.2021
(60) Divisional application: 25225976.7
(73) Proprietor: LN1 INC., Southampton, NY 11968 (US)
(72) Inventor: NILL, Lance, Southampton, NY 11968 (US)
(74) Representative: Swindell & Pearson Limited
(86) International application number: PCT/US2019/043264
(87) International publication number: WO 2020/023653

(56) References cited:
- DE-A1- 102010 051 320
- DE-A1- 102011 116 877
- DE-A1- 102011 116 877
- JP-A- 2014 152 548
- JP-B2- 5 675 295
- US-A- 3 245 181
- US-A- 3 456 412
- US-A- 4 690 365
- US-A- 6 015 138
- US-A1- 2001 009 087
- US-A1- 2005 053 449
- US-A1- 2008 240 883
- US-A1- 2009 293 417
- US-A1- 2013 000 243
- US-A1- 2017 175 384
- US-A1- 2018 073 241
- US-B1- 6 295 773
- US-B1- 6 557 912

## Description

This application claims the benefit of U.S. Provisional Patent Application Serial No. 62/702,486, filed September 24, 2018, U.S., and is a continuation-in-part of U.S. PCT Application No. PCT/US2019/018592, filed February 19, 2019, which, in turn, is a continuation-in-part of U.S. Non-Provisional Patent Application Serial No. PCT/US2018/065465 filed December 13, 2018 which is a continuation of U.S. Non-Provisional Patent Application Serial No. 15/852,733, filed December 22, 2017.

### BACKGROUND OF THE INVENTION

### Field of the Invention

An anchor platform assembly for anchoring and mounting an object to a support structure especially useful in the building trade for anchoring and mounting roof accessory structures on roofs and other raised, flat and pitched structures, terraces, balconies and the like, such as e.g., railings, solar panels, lightning rods, while affording a strong, robust and watertight connection.

### Brief Description of the Prior Art

Various methods for mounting and waterproofing roof equipment, accessory structures or the like, which are attached to sloped or flat roofs, building terraces, roof decks, etc. are well known. In the roofing industry, there are many problems with water infiltration at equipment attachment points, particularly when flashing is not incorporated and/or sealants are solely relied on. A variety of sheathing methods and combinations thereof are used as water and moisture barriers on such structures, such as asphalt roof tiles, poured or sheeted plastic or rubber membranes and the like. Currently, more and more heavy roof structures are being mounted on roofs such as, e.g., solar panels, satellite dishes, HVAC equipment, etc.

Especially for roof decks, balconies, terraces and the like, glass walls and/or railings are being mounted to avoid viewing obstructions such as would normally be the case with a wooden, cable or metal fence. These generally heavy structures must also be anchored to the roof structures. However, because of the loads they generate and the manner in which they are mounted, typically with anchors bolted through the roof, they create a "conduit" for water to penetrate through the roof, notwithstanding the fact that adhesives or glues are often used to seal the conduit in an attempt to prevent such water penetration.

In fact, over time, these heavy structures as a result of normal repetitive roof movement or shifting caused by, e.g., settling, temperature changes, and/or high winds, cause cracks in the adhesive or glues employed and cause eventual roof leaks. As a result, it is difficult for many of the installers to provide guarantees or obtain insurance against water or moisture damage caused by such conventional anchoring and mounting systems.

The present invention seeks to overcome this problem by providing a novel anchoring and mounting system which avoids such problems in a highly advantageous and effective manner.

Accordingly, it is an object of the present invention to provide a novel anchor platform assembly usable for a wide variety of applications, especially for anchoring equipment and/or roof accessory structures to roofs and the like, which can accommodate heavy loads and provide waterproof protection at the equipment and/or roof accessory structure attachment points.

It is a further object of the present invention to provide such a novel anchor platform assembly which is relatively simple in design and construction, easy to install and is relatively inexpensive to make.

It is another object of the present invention to provide such a novel anchor platform assembly which can be used for a variety of roof or raised structures, including both flat roofs and pitched roofs, as well as roof decks, outdoor balconies, terraces and the like.

It is yet another object of the invention to provide such a novel anchor platform assembly which is more reliable than prior art systems in providing a waterproof connection at the equipment attachment or accessory points.

It is a more particular object of the present invention to provide such a novel anchor platform assembly which is universally adaptable for anchoring and mounting a multitude and wide variety of objects to support structures, such as, e.g., roof accessory structures including, *inter alia,* lightning rods, antennas, solar panels, satellite dishes, safety rails, glass railings, HVAC heating and air conditioning equipment, decorative sculptures, holiday ornaments, and the like, etc., while at the same time providing a watertight connection.

JP 5675295 B2 discloses a post-construction foundation anchor for fixing a relatively large installation such as a photovoltaic power generation panel to a concrete base material. The foundation anchor includes a fixing anchor which is a metal expansion anchor, a main pillar member with an internal thread and a base side contact portion. The base side contact portion has a cylindrical externally threaded portion that protrudes the surface and an anchor hole which is continuous with a hole within the cylindrical threaded portion. The main pillar member screws onto the cylindrical threaded portion of the base-side contact and the fixing anchor is inserted into the anchor hole fixing the foundation anchor to the concrete base material. A bolt can be screwed into the internal thread of the main pillar member onto which an attachment such as a support frame (to which the installed object is fixed) can be attached.

### SUMMARY

The invention is set out in the appended set of claims.

### BRIEF DESCRIPTION OF THE DRAWINGS

Other objects and features of the present invention will become apparent from the detailed description considered in connection with the accompanying drawings, which disclose several examples. It is to be understood that the drawings are to be used for the purpose of illustration only and not as a definition of the limits of the invention. In the drawings:
FIG. 1 is a top and side perspective view of a first example of an anchor baseplate utilized in an anchor platform assembly;
FIG. 2 is a bottom and side perspective view of the anchor baseplate shown in FIG. 1;
FIG. 3 is a fragmentarily-illustrated, perspective view of a first example of the anchor platform assembly employing a plurality of serially-arranged, spaced-apart, anchor baseplates mounted on a roof deck and anchoring thereto a plurality of spaced-apart elongated rails each having a U-shaped channel or shoe which supports a pair of glass railings;
FIG. 4a is an exploded, cross-sectional view of the anchor platform assembly including the anchor baseplate in positional relationship with respect to the U-shaped shoe and the roof deck shown in FIG. 3 and further showing the roof flashing materials, fasteners and adhesives employed therewith;
FIG. 4b is a plan view of the anchor baseplate and an optional shim plate centered thereon for adjusting the height of the rail;
FIG. 4c is a cross-sectional view of the anchor platform assembly shown in FIG. 4a in a fully, mounted state on a roof deck whereby the glass rail is anchored via its U-shaped shoe to the roof;
FIG. 5a is an exploded, cross-sectional view of a second example of the anchor platform assembly comparable to FIG. 4a, but showing the anchor baseplate having an internally threaded post with a reduced width neck section;
FIG. 5b is a cross-sectional view of the second example in a fully mounted state, comparable to FIG. 4c, but showing the use of an internally threaded post with a reduced width neck section seated within the central bore of the anchor baseplate;
FIG. 6a is an exploded, cross-sectional view of a third example of the anchor platform assembly comparable to that shown in FIGS. 4a and 5a, but showing an anchor baseplate having an externally threaded post;
FIG. 6b is a cross-sectional view of the third example of the anchor platform assembly in a fully mounted state comparable to that of FIGS. 4c and 5b, but showing the externally threaded post securing the anchor baseplate to the roof deck from beneath the roof deck via a nut and a washer;
FIG. 7a is a cross-sectional view similar to FIG. 6b, but showing an accessory unit supporting the glass railing and its supporting shoe in a raised position, spaced above the roof deck and offset from the center hole in the anchor baseplate;
FIG. 7b is a perspective view of an anchor platform assembly accessory unit for supporting a roof accessory structure in an offset and raised arrangement relative to the anchor baseplate and roof deck, respectively;
FIG. 8a is a side elevational view of a combined flush screw anchor and fastener assembly according to a fourth example;
FIG. 8b is a side elevational view, in part section, of the flush screw anchor assembly shown in FIG. 8a;
FIG. 8c is a top view of the flush screw anchor flange assembly shown in FIGS. 8a and 8b;
FIG. 8d is a side elevational view, in part section of a flush screw anchor assembly, similar to FIG. 8b, but showing the optional provision of a flat head screwdriver port;
FIG. 8e is a top plan view of the flush screw anchor flange assembly shown in FIG. 8d;
FIG. 8f is a side elevational view, in part section of a flush screw anchor assembly, similar to FIG. 8b, but showing the optional provision of an Allen key port;
FIG. 8g is a top plan view of the flush screw anchor assembly shown in FIG. 8f;
FIG. 8h is a side elevational view of a raised hex head screw anchor and fastener assembly according to a fifth example;
FIG. 8i is a side elevational view, in part section, of the hex head screw anchor assembly shown in FIG. 8h;
FIG. 8j is a top plan view, in part section, of the hex head screw anchor assembly shown in FIG. 8h;
FIG. 9a is an exploded, cross-sectional view of the anchor platform assembly according to a sixth example comparable to FIG. 6a, but showing it supporting a lightning rod and cable, and further showing the use of roof flashing materials, fasteners and adhesives employed therewith;
FIGS. 9b is a cross-sectional view of the anchor platform assembly shown in FIG. 9a in a fully mounted state;
FIG. 10a is an exploded, cross-sectional view according to a seventh example for supporting a lightning rod, where the anchor baseplate is positioned in an upside-down state with the threaded post extending above instead of below the anchor baseplate as shown in FIGS. 9a and 9b, and further showing the roof flashing materials, fasteners and adhesives employed therewith;
FIG. 10b is a cross-sectional view of the anchor platform assembly shown in FIG. 10a in a fully mounted state;
FIG. 11 is an exploded, cross-sectional view of an anchor platform assembly embodying an eighth example, pertaining to the present invention, for supporting a lightning rod, wherein the anchor baseplate is welded to an internally-threaded, dual cylindrical post having an upper post extending above the baseplate having a threaded blind bore in which the lightning rod is threadably receivable and a lower post having a threaded blind bore to which a grounding cable is clamped;
FIG. 12 is an exploded, cross-sectional view of an anchor platform assembly embodying a ninth example for supporting a lightning rod and clamped grounding cable mounted above and along the peak of a pitched roof;
FIG. 13 is an exploded, cross-sectional view of a flush screw anchor assembly embodying a tenth example of the type shown in FIGS 8a-8c, supporting a lightning rod and grounding cable on top of a roof;
FIG. 14 is an exploded, cross-sectional view similar to FIG. 13, but showing instead the small flush anchor being used to support a length of grounding cable supported by a clamp affixed above and along the roof via a threaded bolt receivable in the anchor's threaded blind bore;
FIG. 15 is an exploded, cross-sectional view of a raised hex head screw anchor assembly of the type shown in FIGS. 8h-8j embodying an eleventh example shown supporting a lightning rod on top of a roof;
FIG. 16 is an exploded, cross-sectional view similar to FIG. 15, but showing instead the raised hex head screw anchor shown in FIGS. 8h-8j being used to support a length of grounding cable supported by a clamp along the top of the roof via a threaded bolt receivable in the anchor's threaded blind bore;
FIG. 17a is a side elevational view of a dual post anchor baseplate assembly according to a twelfth example, pertaining to the invention, having an externally- threaded, cylindrical upper and an externally-threaded, cylindrical lower post, the latter of which has a smaller diameter than the upper post;
FIG. 17b is a top plan view of the dual post anchor baseplate assembly shown in FIG. 17a;
FIG. 17c is a bottom plan view of the dual post anchor baseplate assembly shown in FIG. 17a;
FIG. 18a is a side elevational view of a dual post anchor baseplate assembly according to a thirteenth example, pertaining to the present invention, having an externally-threaded, cylindrical upper post with an Allen key port and an externally- threaded, cylindrical lower post, the latter of which has a smaller diameter than the upper post;
FIG. 18b is a top plan view of the dual post anchor baseplate assembly shown in FIG. 18a;
FIG. 18c is a bottom plan view of the dual post anchor baseplate assembly shown in FIG. 18a;
FIG. 19a is a side elevational view of a dual post anchor baseplate assembly according to a fourteenth example, pertaining to the present invention, having an externally-threaded, cylindrical upper post with a threaded blind bore and an externally- threaded, cylindrical lower post, the latter of which has a smaller diameter than the upper post;
FIG. 19b is a top plan view of the dual post anchor baseplate assembly shown in FIG. 19a;
FIG. 19c is a bottom plan view of the dual post anchor baseplate assembly shown in FIG. 19a;
FIG. 20a is a side elevational view of a dual post anchor baseplate assembly according to a fifteenth example, pertaining to the present invention, having an externally-threaded, cylindrical upper post with a blind bore and an externally-threaded, cylindrical lower post with a blind bore, both of which have the same diameter;
FIG. 20b is a top plan view of the dual post anchor baseplate assembly shown in FIG. 20a;
FIG. 20c is a bottom plan view of the dual post anchor baseplate assembly shown in FIG. 20a ;
FIG. 21a is an exploded, side elevational view, in part section, of an anchor baseplate assembly utilizing both the dual post anchor baseplate assembly of FIG. 19a and the flush mount screw anchor of FIG. 8d for supporting an L-shaped solar panel bracket on a roof;
FIG. 21b is a side elevational view of the anchor baseplate assembly shown in FIG. 21a in a fully mounted state;
FIG. 22a is an exploded, side elevational view of a dual post anchor baseplate assembly utilizing the dual post anchor baseplate assembly of FIG. 20a to anchor a lightning rod to its externally-threaded, cylindrical upper post above the roof and a grounding cable to the externally-threaded, cylindrical lower post below the roof; wherein both posts have an internally-threaded inner blind bore; and
FIG. 22b is a side elevational view of the anchor baseplate assembly shown in FIG. 22a in a fully mounted state; and
FIG. 23 is an exploded, cross-sectional view of an anchor platform assembly employing a sixteenth example, pertaining to the present invention, for supporting a lightning rod and grounding cable, wherein the anchor baseplate is welded to an externally-threaded, dual cylindrical post having an upper post extending above the baseplate on which the lightning rod is threadably receivable and a lower post extending below the baseplate to which a grounding cable is clamped.

### DETAILED DESCRIPTION

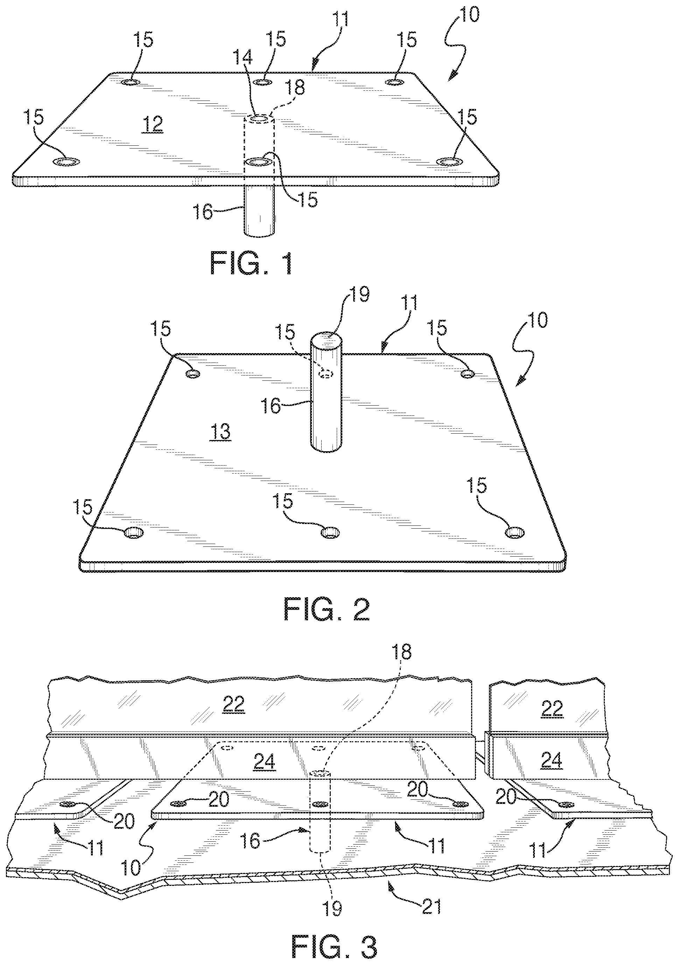

The first through seventh, ninth through eleventh and fifteenth examples set forth herein in association with FIGS. 1-10b, 12-16 and 20-22 are not encompassed by the wording of the claims but are considered as useful for understanding the invention.

Turning now in detail to the drawings and, in particular, to FIGS. 1-7b thereof, therein illustrated is a novel anchor platform assembly, as more particularly described and shown in Applicant's aforementioned U.S. Patent Applications Serial No. 15/852,733 and Application No. PCT/US2019/018592 for anchoring objects to a support structure, especially intended for a wide variety of anchoring applications which are universally adaptable to many different fields of use.

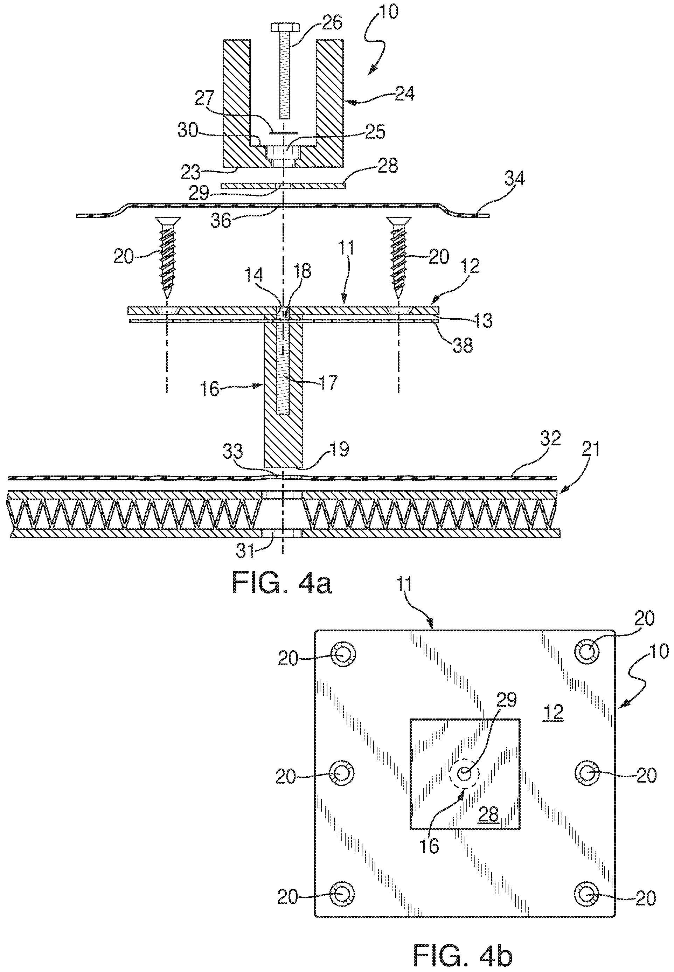

FIGS. 1-4c thereof illustrates a first example which comprises a novel anchor platform assembly, generally designed by reference numeral 10, especially designed for anchoring roof accessory structures to roofs and other raised, flat and/or pitched structures, such as terraces, balconies, stairs and the like. The main component of the anchor platform assembly is the anchor baseplate, generally designated by reference numeral 11, which preferably is made of stainless steel (but could be made of other metals, such as aluminum, bronze, etc.), and is preferably square or rectangular shaped and has a top surface 12 and a bottom surface 13. The anchor baseplate 11 has an internally-threaded central through bore 14 and six spaced apart peripheral through bores 15 positioned radially outward from the center bore 14 and generally adjacent to the periphery of the baseplate 11. In this example, the anchor baseplate 11 also includes a preferably cylindrical rod or post 16 having an axially-extending, internally-threaded bore 17 (see FIG. 4b) having a top open end 18 and a closed bottom 19 (FIG. 2) which is secured preferably via welding to the anchor baseplate 11 so that the top open end 18 of its bore 17 abuts and is in registry with the bottom open end of center through bore 14 (see FIG. 4b).

As shown in FIG. 3, the anchor baseplate 11 of the anchor platform assembly 10 is typically mounted via mechanical fastening elements 20 preferably in the form of nails, bolts, or lag screws, to a roof structure, such as a roof deck, generally designated 21, with its cylindrical post 16 extending through the roof deck 21 and projecting below the roof deck with its closed end 19. The internally threaded and aligned bores 14 and 17 serve as an anchor point for an object to be mounted on the roof deck 21. In this case, the object is a glass railing of the type that has glass panel 22 with a lower edge secured within an elongated U-shaped metal channel or shoe 24. FIG. 3 specifically depicts three serially arranged and spaced apart anchor baseplates 11 to which two glass panels 22 and two shoes 24 are at least partially mounted. In use, such glass railings can be hundreds of feet in length. As can be appreciated, depending on the length of each glass railing 22, two or more anchor baseplates 11 per glass rail 22 may be required as shown in FIG. 3.

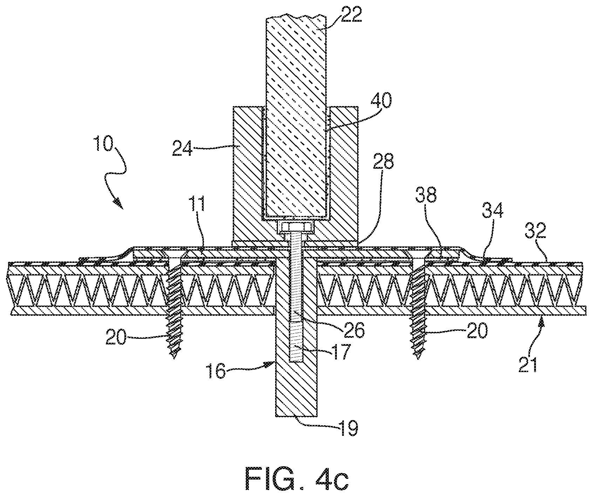

As seen best in FIGS. 4a and 4c, an elongated U-shaped shoe 24 has a base wall 23 with a plurality of spaced apart through bores 25 (only one of which is shown). As will be discussed in greater detail hereinafter, cylindrical mechanical fasteners having a straight-thread are used, such as a threaded bolt 26, and washer 27, which bolt 26 is receivable through the through bore 25 of the U-shaped shoe 24 and is receivable within the internally-threaded center bore 14 of anchor baseplate 11 and internally-threaded blind bore 17 of the cylindrical post or rod 16 (FIG. 4c) to anchor the same to the roof deck 21. The cylindrical post 16 with the closed bottom 19 serves two purposes: (1) it provides a relatively sturdy and rigid anchoring support point for the object to be mounted on the roof, and (2) it prevents water from penetrating via the central bore 14 into and below the roof deck 21 as a result of blind bore 17 and the bottom end 19 of the cylindrical rod 16 being closed.

FIG. 4b shows the use of a square-shaped shim plate 28 having a central through bore 29 mounted atop the anchor baseplate 11 such that its central through bore 29 is directly over and in registry with the internal blind bore 17 of the cylindrical post 16. The shim plate 28 is used to adjust the height of the shoe 24 to ensure proper alignment of adjacent shoes 24 and the glass railing(s) 22 they support due to variations in height of the roof deck 21 or the like. Additional shim plates 28 can, of course, be used, if needed, to achieve proper height alignment.

As illustrated in FIGS. 4a and 4c, the central throughbore 25 of the U-shaped channel or shoe 24 contains a step which is dimensioned and configured to receive and support the bolt head of bolt 26 and washer 27 on the step so that the bolt head of bolt 26 is disposed below the top surface 30 of the lower base wall 23 of U-shaped shoe 24 so as not to abut and possibly crack or damage the bottom edge of the glass railing 22.

FIGS. 4a and 4c respectively show an exploded cross-sectional view and a fully mounted cross-sectional of the anchor platform assembly 10 which include preferred flashing materials, fasteners and adhesives and the like for mounting a glass railing to a roof deck or terrace or the like. As shown in FIG 4a, the anchor baseplate 11 is positioned above the roof deck 21 which may be of wood, metal or composite construction as is standard or conventional in the industry. The cylindrical post 16 of the anchor baseplate 11 is intended to be inserted through a through bore 31 in the roof deck 21 and a through bore 33 of a conventional rubber roof membrane 32, preferably made of neoprene, and preferably interposed between the anchor baseplate 11 and roof deck 21. Similarly, a conventional rubber roof membrane 34, also preferably made of neoprene, is preferably positioned between the optional shim plate 28 and the top surface 12 of the anchor baseplate 11 and it too is provided with a central bore 36 to allow the bolt 26 to pass through the membrane 34. In addition, a sealant, cement, caulk or adhesive layer 38 is shown which would normally be applied to the bottom surface 13 of the anchor baseplate 11 to adhesively join and seal the same to the roof membrane 32.

As also shown in FIG. 4c, an adhesive, caulk, cement or glue 40 (and/or optionally clips) is also applied to the inner surface of the U-shaped channel 24 so that it surrounds the lower end of glass railing 22 received within the U-shaped metal channel 24. As also illustrated therein, the anchor baseplate membrane 34 extends over the entire anchor baseplate 11 with its ends sealed against the roof membrane 32 thereby sealing the screw holes and the remainder of the anchor baseplate 11. As can be appreciated, these flashing materials and adhesives serve to waterproof the assembly and protect the roof from leaks.

As previously mentioned, this is particularly important at the point of attachment of the object to the roof which, in this case, refers to the point of attachment of the glass railing shoe 24 to the anchor baseplate cylindrical post 16 via bolt 26 and the blind threaded bore 17 in which the bolt 26 is received. Since bore 17 is a blind bore or hole and the bottom 19 end of the cylindrical post 16 is closed, the potential path of any water that could conceivably penetrate between the glass panel 22 and the U-shaped channel 24 and enter the bore 17 of the cylindrical post 16 is totally blocked from penetrating the roof deck 21.

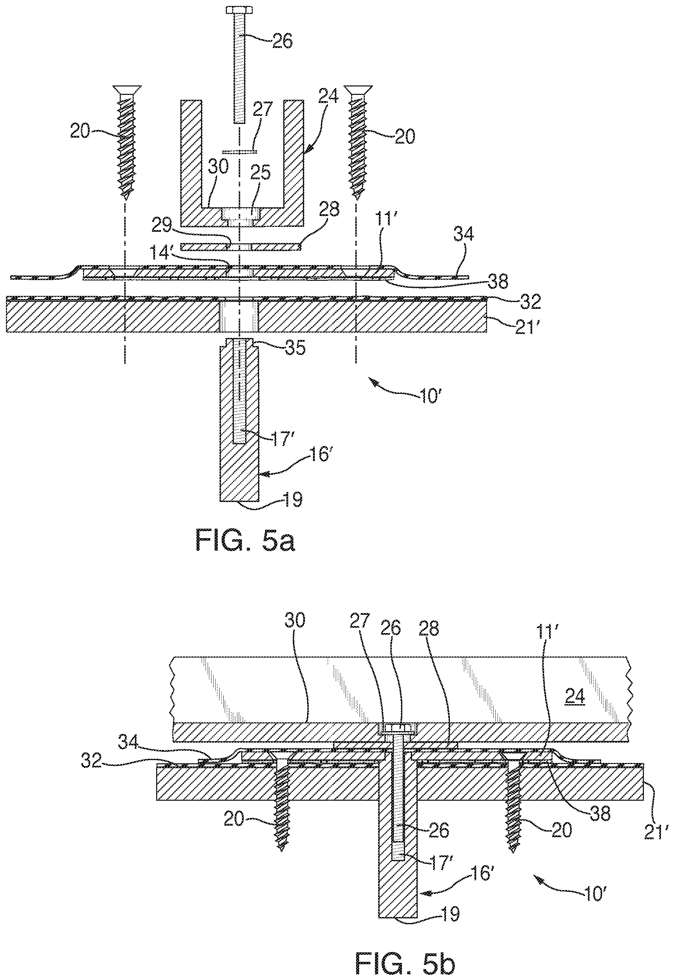

FIGS. 5a and 5b illustrate a second example of the anchor baseplate assembly 10' and, in a similar fashion, respectively show an exploded cross-sectional view and a fully mounted cross-sectional view of this second example of the anchor platform assembly 10'.

The elements shown in this second example are the same as shown in FIGS. 4a and 4c with the exception that the cylindrical post 16' is provided with a narrow neck portion 35 and the baseplate 11' is provided with a non-threaded central bore 14', but both are otherwise identical to the baseplate 11' and cylindrical post 16 shown in the previous example. In FIGS. 4a and 4c, the top end 18 of the cylindrical post 16 would typically be welded to the bottom surface 13 of the anchor baseplate 11'. In FIGS. 5a and 5b however, the narrow neck section 35 is intended to be received within the non-threaded central bore 14' of the anchor baseplate 11' and as a result of this construction, a more robust, and stronger bond is made. The stronger bond is due to the fact that when anchor plate 11' and post 16' are welded together with the respective center bore 14' and internal threaded bore 17' being held in proper axial alignment by the reduced neck section 35 of the post 16' being received in the center bore 14', the narrow neck portion extending into the non-threaded central bore 14'.

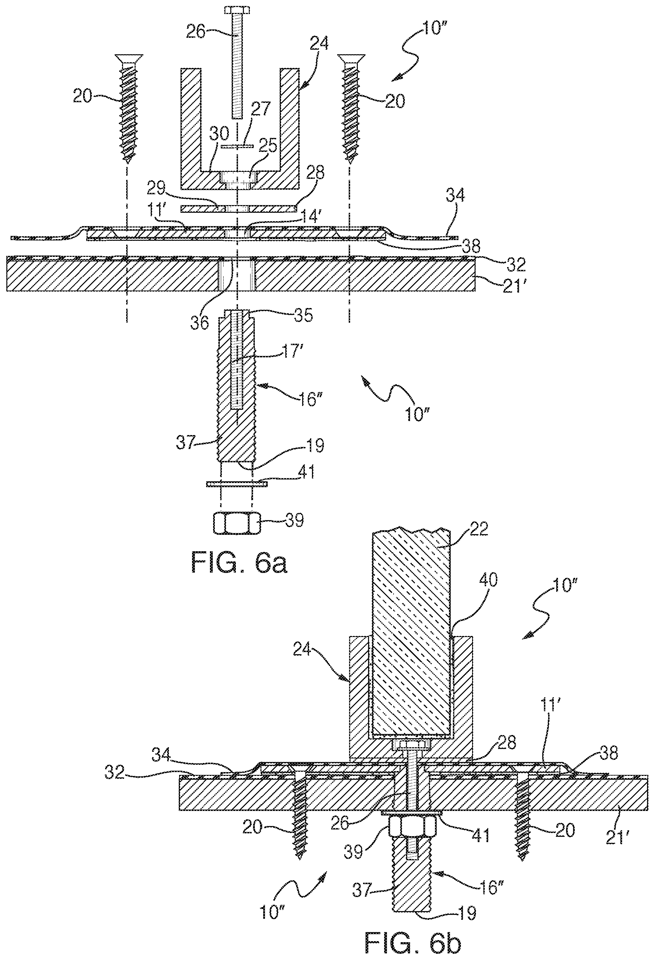

FIGS. 6a and 6b illustrate a third example of the anchor baseplate assembly 10" and, in a similar fashion, respectively show an exploded cross-sectional view and a fully mounted cross-sectional view of this third anchor platform assembly example. The elements shown in this third example are the same as shown in FIGS. 5a and 5b with the exception that the lower portion 37 of cylindrical post 16" is externally threaded but is otherwise identical to the cylindrical post 16'. In this example, a nut 39 and washer 41 are threaded onto the externally threaded surface 37 of the cylindrical post 16" so that in the fully assembled state shown in FIG. 6b, the nut 39 and washer 41 are tightened against the lower surface of the metal roof deck 21' to provide a stronger point of attachment while, at the same time, preventing roof leaks at the point of attachment via the blind bore 17' and the closed end 19 of the cylindrical post 16".

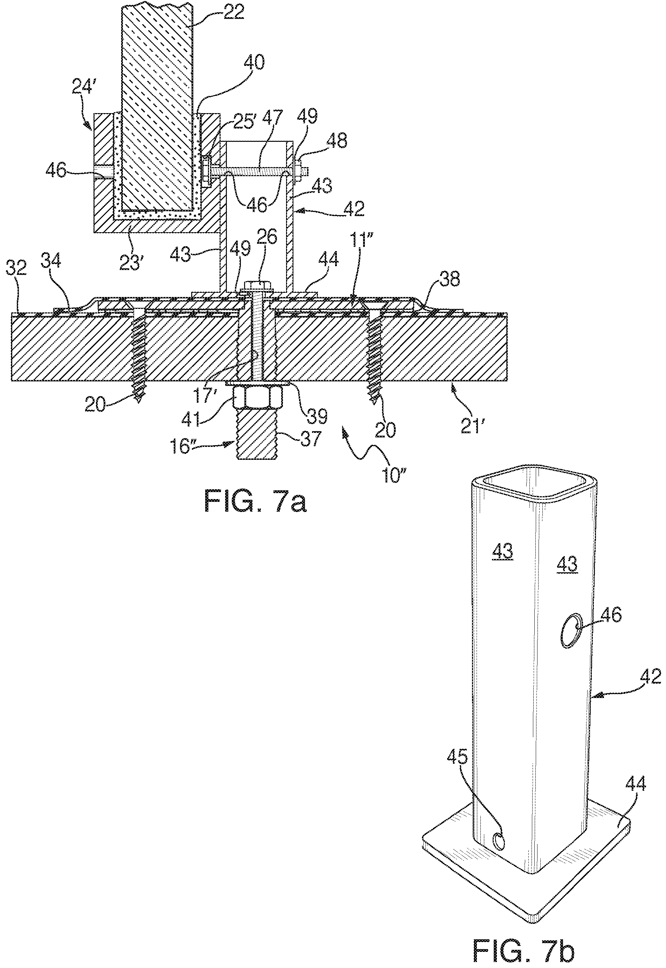

FIGS. 7a and 7b illustrate a novel accessory support stand 42 for the various anchor plate assemblies shown herein which allows the user to support an object in a raised and spaced manner above the anchor baseplate. The accessory support stand 42 comprising a preferably metal, square or rectangular planar base 44 and an upstanding preferably metal square-shaped, tubular body member composed of four sidewalls 43 joined at one end to the planar base 44 by welding. A weep hole 45 is provided at the base of one sidewall 43 to allow water to drain therefrom. The base 44 has a central hole 49 (FIG. 7b) which is alignable with the internally threaded bore 17' of the cylindrical post 16" and the threaded stem of bolt 26 is threadably received within the internally-threaded bore 17' to anchor the support stand 42 to the anchor baseplate 11". At least one set of horizontally aligned holes 46 are formed in opposite side walls 43 of the upstanding tubular body through which a threaded bolt 47 could be mounted to secure an object to one of the sidewalls 43 of the support stand 42 as shown best in FIG. 7b. In this case, the U-shaped channel 24' is provided with a recessed through bore 25' in one of its sidewalls rather than in its base wall 23' as shown in the examples of FIGS. 1-6. The bolt 47 is held in the recessed throughbore 25' via its bolt head being held against the step of the channel through bore 25' and at its opposite end (i.e., the free end of its threaded shaft extending through the sidewall hole 46) by an additional nut 48 and washer 48 to secure the U-shaped channel 24' in a raised and elevated position relative to the anchor baseplate 11" and roof member 21' and offset relative to the center blind bore of the anchor baseplate 11".

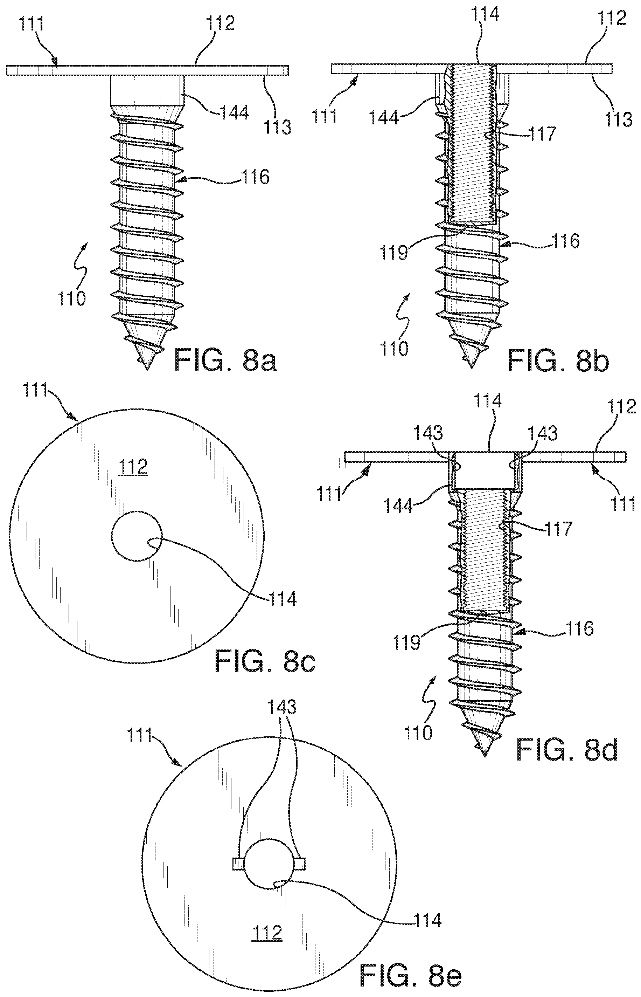

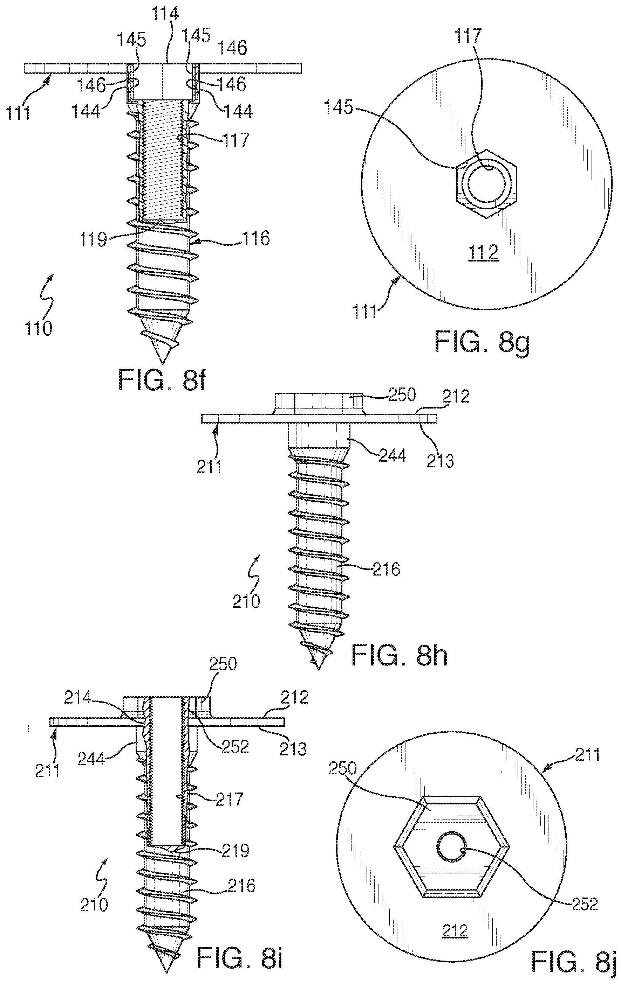

Turning now in particular, FIGS. 8a-8j illustrate several examples of the novel screw anchor and fastener assemblies (hereinafter generally referred to as "screw anchors" or "screw anchor assemblies"), as shown and described in Applicant's earlier filed continuation-in-part PCT Application No. PCT/US2019/018592. As shown in FIGS. 8a-8c, anchor assembly 110 is a flush screw anchor and is particularly useful in the building trade for a myriad of uses. Flush screw anchor assembly 110 comprises a preferably planar baseplate, flange or washer 111 having an upper surface 112, an opposite lower surface 113, and an optionally-internally-threaded central opening 114 extending therethrough. Additionally, screw anchor assembly 110 also includes an externally-threaded post, preferably in the form of a screw or a lag screw 116 secured to anchor baseplate 111 and extending downwardly from lower surface 113 of baseplate 111. As shown best in FIG. 8b, the upper shaft of screw 116 includes an axially-extending, internally-threaded central bore 117 which merges with and is axially aligned with central opening 114 of baseplate 111. Bore 117 has a diameter smaller than the external diameter of the externally-threaded upper shaft of screw 116.

Bore 117 in screw 116 is a blind bore having an open top end defined by the bore 114 in flange or baseplate 111 and a closed bottom end 119 in the shaft of screw 116. It is also preferred that screw 116 and baseplate 111 are integrally joined to form a one-piece combined anchor and fastener assembly or component. Screw 116 can be secured to baseplate 111 via welding, a press-fit connection or by any other fastening means that would insure that screw 116 and baseplate 111 are securely and rigidly fastened together to provide a strong and robust anchor.

As will be shown and discussed hereinafter in relationship to the installation and use of the screw anchors for this example and the other examples described herein, a fastener typically in the form of bolt 26 having an enlarged head and a threaded shaft together with a washer 27 as shown in FIGS. 4a, 4c, 5a, 5b, 6a, 6b and 7a is threadably receivable in the bore 117 to hold and securely fasten an object to the anchor so that the object, or part thereof or an associated accessory structure therefor (as to the latter, see, e.g., the U-shaped shoe 24 used to support a glass panel 22 for a roof railing), is securely held fast against the upper surface 112 of anchor baseplate 111. This is accomplished preferably by providing a throughbore 25 in the object, part or accessory structure therefor, through which the threaded shaft of the bolt 26 is passed through before it is threaded into the blind bore 117 of the screw anchor 110 and tightened to securely fasten the object to the screw anchor.

FIGS. 8d and 8e illustrate a modification of the flush anchor example shown in FIGS. 8a-8c, wherein a recessed, flat head screw slot or port 143 is formed in baseplate 111 on opposite sides of its central bore 114 which extends therebelow into the upper, externally smooth and enlarged head portion 144 of lag screw flush anchor 110 on opposite sides of its central bore 117 to allow a flat head screwdriver or other tool (not shown) to be inserted into said slot 143 to facilitate turning of the externally- threaded shaft of screw 116 to either screw the anchor 110 into the intended supporting structure or to threadably remove it therefrom, if e.g., it needs to be repositioned in the building supporting structure.

FIGS. 8f and 8g illustrate another modification of the screw anchor assembly shown in FIGS. 8a-8c, wherein instead of the employment of a flat head screwdriver port 143, an Allen key port 145 is provided. More particularly, a countersunk head space 146 is provided above the top end of the blind bore 117 in the anchor baseplate 111 and in the upper, externally smooth enlarged head portion 144 of lag screw anchor 110 extending downwardly from the top surface 112 of washer 111 into the countersunk head space 146 provided in, and jointly defined, by baseplate 111 and head portion 144.

The head space 146 has an inner wall configured to define a preferably hexagonal central bore 145 which serves as the Allen key port. The Allen key port 145 is designed to receive an Allen key (not shown) by which the flush screw anchor 110 can be easily and threadably screwed into, and removed from the support structure, as described and illustrated in greater detail hereinafter.

In a fifth example of the screw anchor assembly, as shown in FIGS. 8h-8j, a hex head lag screw anchor 210 is provided having a hexagonal hex nut 250 secured atop upper surface 212 of baseplate 211. The hexagonal hex nut 250 serves the same purpose as the screwdriver slot, Allen key port, or the like, whereby a tool such as a socket wrench (not shown) can be used which is configured to grip the hex head to facilitate its threaded engagement into, or removed from a support. External hex nut 250 is preferably integrally joined to baseplate 211, such as by welding, to form a one-piece component. As shown best in FIG. 8i, external hex nut 250 contains an internally-threaded, central through bore 252 which is in axial alignment and registering with central bore 217 of lag screw 216 and bore 214 of baseplate 211. While anchor 210 is illustrated and described as having a hexagonal shaped nut 250, other polygonal or geometric shapes are possible as further disclosed below.

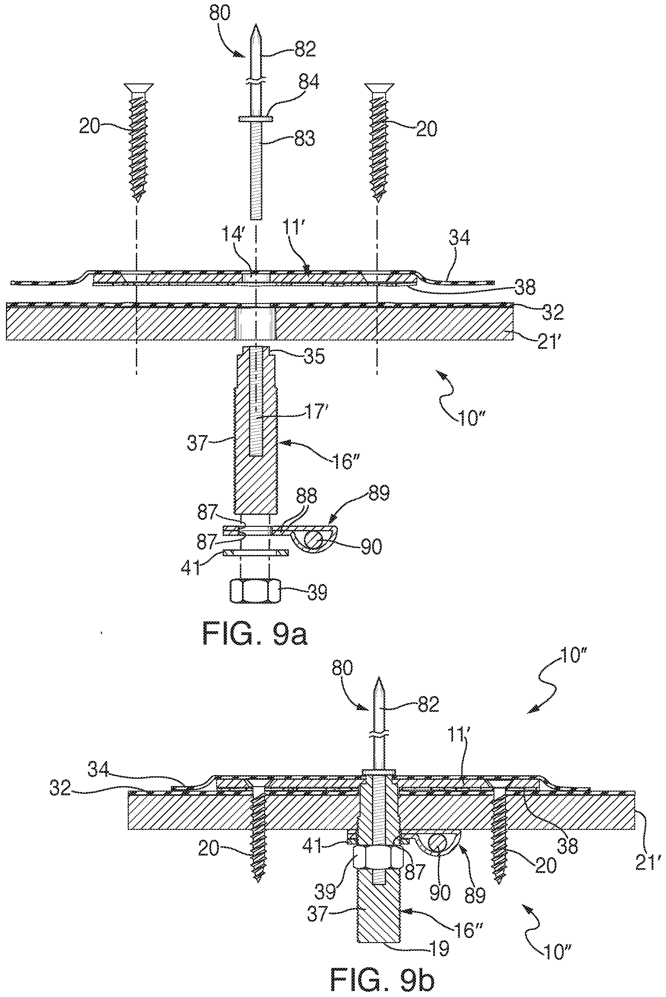

Turning now to FIGS. 9a, 9b, 10a, 10b, 11, and 12, these figures illustrate the use of the anchor platform assembly to mount a conventional lightning rod assembly 80 on a roof or other structure. A conventional lightning rod comprises a pointed metal rod typically attached to the roof of a building. The rod might be 2.5 centimeters (cm) (an inch) in diameter. It connects to copper or aluminum wire or cable 90 that is also 2.5 cm (an inch) or so in diameter. The cable 90 is usually connected to a conductive grid or plate buried in the ground nearby (not shown). In a lightning strike, the lightning rod 80 provides a lowresistance path via the cable 90 to the ground that can be used to conduct enormous electrical currents away from the structure and safely to the ground.

More particularly, FIG. 9a is an exploded, cross-sectional view of a sixth example of the anchor platform assembly 10" used for supporting and mounting a lightning rod generally designated 80, on a roof or other structure 21'. As shown, the baseplate assembly 11' is generally the same as depicted in the third example shown in FIGS. 6a and 6b. The post 16" has a lower externally- threaded portion 37 physically attached (e.g., welded) to the lower surface of the baseplate 11'. The blind bore 17' in post 16" is also threaded. The lightning rod 80 preferably has a pointed, elongated, cylindrical upper body 82 joined via a fixed collar 84 to a lower, threaded cylindrical rod 83, which rod 83 is threadably receivable in blind bore 17' of post 16". Below the roof, a generally C-shaped, double-armed clamp 89 is employed to securely hold the grounding cable 90 and is provided with a mounting hole 87 in each of its arms 88 by which it is mounted on the threaded portion 37 of the post 16". A washer 41 and nut 39 are receivable on the lower threaded end 37 of post 16" and, as seen best in FIG. 9b, upon tightening of nut 39 on post 16", the washer 41 and nut 39 press against and securely fasten the C-shaped clamp 89 and the cable 90 held thereby to the underside of the roof 21'. The grounding cable 90 extends along the underside of the roof and ultimately is guided to the ground where it typically would be attached to a grounding grid or plate in the ground (not shown). In actual use, the grounding cable 90 will be attached to the lightning rod assembly with the aid of a variety of conventional grounding and clamping assemblies for attaching the grounding cable 90 to the lightning rod 80 and ground, which are well known by those skilled in the art. The C-shaped clamp described and illustrated herein is merely a simplified representation of these commercially available clamps.

As shown best in FIG. 9a, the cylindrical post 116 is provided with a narrow neck portion 35 and the baseplate 11' is provided with a non-threaded central bore 14' to realize a more robust stronger bond therebetween. The stronger bond is due to the fact that when said anchor plate 11' and post 16" are welded together, with the respective center bore 14' and internally-threaded bore 17' of post 16" being held in proper alignment by the reduced neck section 35, the narrow neck portion 35 extends into the non-threaded central bore 14', like a dowel which affords not only a strong, rigid joint, but also an exact 90° alignment of the baseplate 11' and post 16". Of course, it is also possible to use the anchor plate 11' and post 16" without the reduced neck section, as an option, depending on the nature and demands of the strength of the anchor assembly for the particular application, such as shown in FIGS. 1-4c.

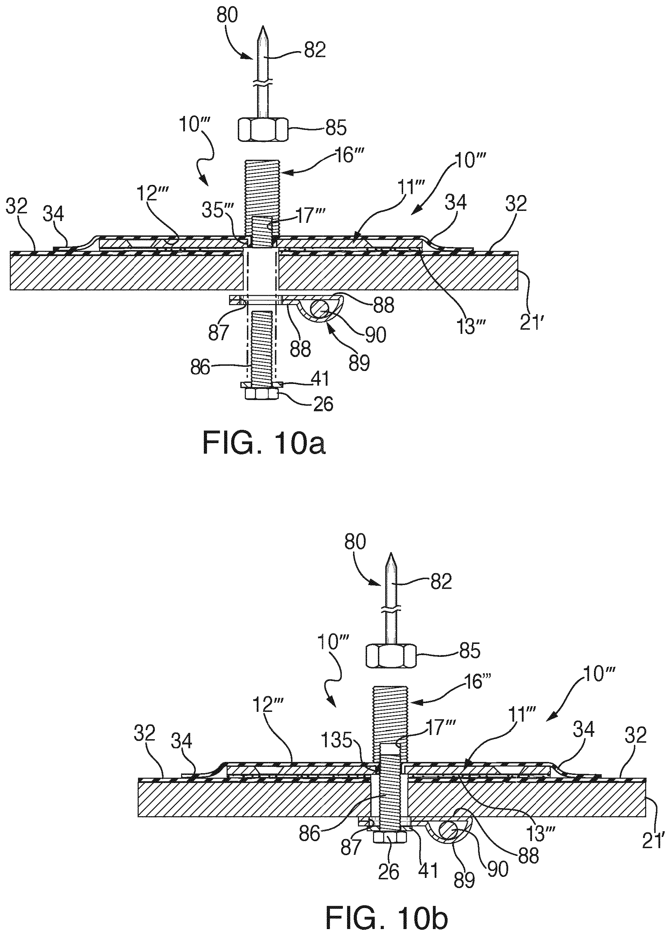

FIG. 10a is an exploded, cross-sectional view of a seventh example of the anchor platform assembly 10"'. The anchor baseplate 11"' of the anchor platform assembly 10"' is in an upside-down version of the anchor baseplate 11' depicted in FIGS. 9a and 9b. The post 16"' has a centrally disposed, threaded blind bore 17"' and narrow neck portion 35"', the latter of which is physically attached (e.g., welded) to the upper surface 12"' of the baseplate 16"', instead of the bottom surface 13"' thereof as shown in the earlier examples. In this example, the grounding cable 90 is again held by a dual-legged, C-shaped clamp 89 via the openings 87 in its pair of arms 88 which is received on the externally-threaded shaft 86 of a bolt 26.

FIG. 10b is a cross-sectional view of the seventh example of the anchor platform assembly 10"' in a fully mounted state but in an upside down manner comparable to that of FIG. 9b. The threaded shaft 86 of bolt 26 is inserted through an opening in the roof deck 21' from beneath the roof deck 21' and the openings in membranes 32 and 34 and threadably received in the internally-threaded blind bore 17"' of post 16"'. The enlarged head of bolt 26 and a washer 41 serve to rigidly secure the C-shaped clamp 89, and, in turn, grounding cable 90 to the bottom surface of the roof.

The pointed shaft 82 of lightning rod 80 is connected to a nut 85, by which the lightning rod 82 is threadably fastened above the roof 21' to the post 16"' of the anchor baseplate assembly 10"'. As a result, the lightning rod 80 is electrically coupled via nut 85 to post 16"', bolt 26 and clamp 89 to the grounding cable 90 and, in turn, to a conductive grid or plate in the ground (not shown).

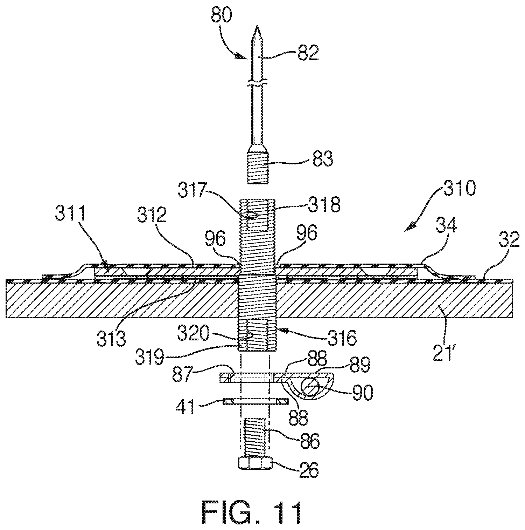

FIG. 11 is an exploded, cross-sectional view of an eighth example of the anchor platform assembly 310 pertaining to the present invention, also having a dual post 316 comprised of an upper post 318 joined to the top surface of the baseplate by welds 96 above the anchor baseplate 311 and having an internally-threaded blind bore 317 opening onto the free upper end of post 318. The dual post 316 also has a lower post 319 extending from the bottom wall 313 and projecting downwardly below the roof 21. It too has an internally-threaded blind bore 320 opening onto its lower free end. A lightning rod 80 has an upper pointed section 82 and an externally-threaded lower section 83 which is threadably received in the threaded blind bore 317 of the upper post 318. On the other hand, the C-shaped clamp 89 is receivable on the lower threaded post 319 so that it can be held beneath the roof 21' abutting its lower surface when so mounted via washer 41 and nut 26 whose threaded shaft 86 is receivable in threaded internal bore 320 of lower post 319.

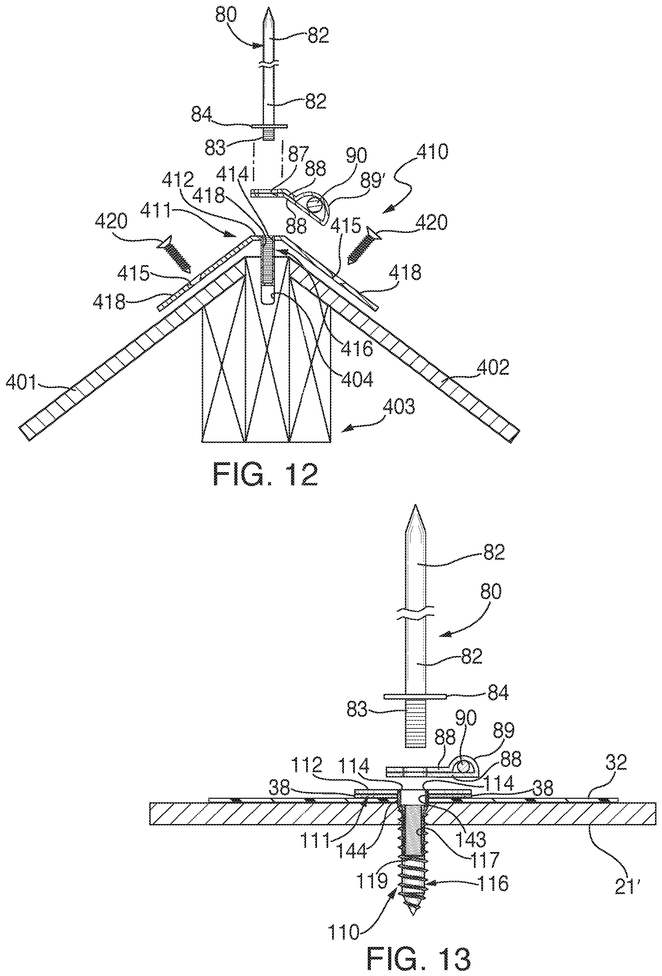

FIG. 12 illustrates a ninth example for applications where the lightning rod needs to be mounted on a pitched roof ridge composed of butted and joined roof sheathing 401, 402 supported by a three-ply roof ridge plate 403. The metallic anchor assembly 410 is provided with a bent baseplate 411 having a central horizontally-disposed central planar section 412 in which central bore 414 is formed and from which depends a cylindrical post 416 which is received within a bore 404 of the roof ridge plate 403. The base plate 411 has two bent wing sections 418 extending from opposite sides of the central planar section 412 which are angled to lie flat against the roof sheathing 401, 402.

As before, baseplate 411 would be attached to the roof sheathing 401, 402 via fastening screws 420 received through holes 415 in the bent wing sections 417. Flashing and adhesive materials (not shown) as used in the other examples would be used in a like manner as before as well.

The cylindrical post 416 can optionally be smooth or externally threaded as also shown in the earlier examples and it further has an internally-threaded central bore 417 in which the threaded lower section of 83 of a lightning rod 80 is threadably receivable so that its upper pointed section 82 projects upwardly preferably from the highest point on the roof. In applications like this, the grounding cable 90 usually runs along the roof ridge to connect to a plurality of spaced-apart lightning rods 82 (not shown) also via clamps 89 or the like.

FIG. 13 illustrates a tenth example of the anchor assembly for securing a lightning rod 80 to roof sheathing 21' covered by a membrane 32. This example employs a small screw anchor of any of the types shown in FIGS. 8a-8e. In this example, a flush screw anchor 110 of the type shown in FIG. 8d is used which has a baseplate or washer 111 having an upper surface 112, an opposite lower surface 113, and a central opening 114 extending therethrough.

As further shown in FIG. 13, the lower surface 113 of baseplate 111 is adhered to a roof membrane 27 via a sealant 38 such as caulk, and the roof membrane 27 is likewise adhesively attached to the typically plywood roof sheathing 21'. The threaded lower end 83 of the lightning rod 80 is inserted therethrough and threadably received in threaded blind bore 117 so that the C-shaped clamp 89 holding cable 90 is tightly clasped between collar 84 and the upper surface 112 of baseplate 111.

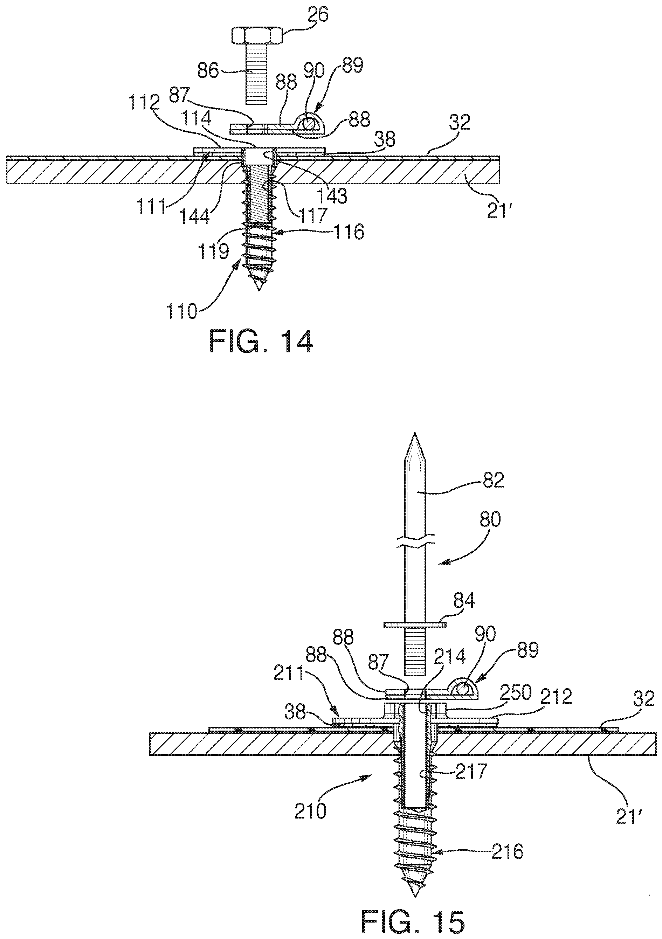

FIG. 14 illustrates the small flush anchor 110 mounted on a roof 21' but instead is being used to support a length of grounding cable 90 along the roof 21' via grounding cable clip 89. The anchor 110 clamps the C-shaped 89 cable via a threaded bolt 26 which is receivable through openings 87 in clip arms 88 and is threadably receivable in threaded bore 117 to clamp the clip 89 between the bolt head 26 and the upper surface 112 of baseplate 111 of anchor 110 when the bolt 26 is fully received in threaded bore 117 of anchor 116. As can be appreciated, multiple spaced-apart small flush anchors 110 may utilize multiple cable clips 89 to affix a length of cable 90 on and along a roof or wall or other structure.

FIG. 15 illustrates an eleventh example of the present anchor assembly, utilizing the hex nut screw anchor assembly 210 of FIGS. 8h-8j. An external hex nut 250 is formed on top surface 212 of baseplate 211. External hex nut 250 is preferably integrally formed with baseplate 211 as a one-piece component. However, hex nut 250 can be welded or otherwise affixed to baseplate 211. External hex nut 250 contains an internally-threaded central through bore 252 which is in axial alignment with central bore 217 of shaft 216 and opening 214 of baseplate 211, as seen best in FIG. 8i. While small raised anchor 210 is illustrated and described as having a hexagonal shaped nut 250, other shapes are possible.

Axially aligned bores 87, 214, and 217 are configured and dimensioned to progressively receive the threaded lower end 83 of the lightning rod 80 to secure the lightning rod 80 to anchor 210 and, therefore, to roof 21' covered by membrane 27. An adhesive layer 38 is also preferably provided on the underside surface 213 of baseplate 210. The lightning rod 80 is also provided with a fixed collar 84 which serves to press against and secure the C-shaped clamp 89 holding the grounding cable 90 against the top of hex head 250 when fully mounted.

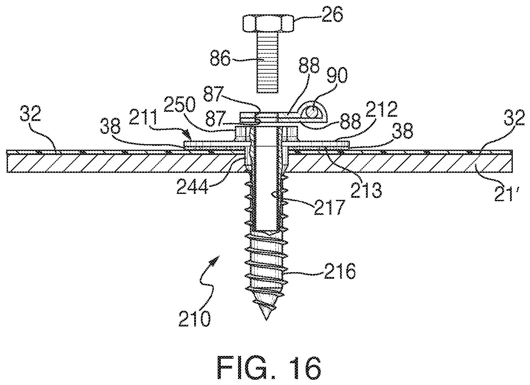

FIG. 16 illustrates the small raised anchor 210 mounted on a roof 21', but instead is being used to support a length of grounding cable 90 along the roof via a grounding cable C-shaped clamp 89. The anchor 210 clamps the cable 90 via threaded bolt 26, whose threaded shaft 86 is receivable through aligned bores 87, 214 and 217 to clamp the clip 89 between the head of bolt 26 and the upper surface of baseplate 211 when full received in threaded bore 217 of anchor 210. Here too, multiple spaced-apart small raised anchors 110 can be used to affix a length of grounding cable 90 via multiple cable clips 89 on and along a roof, wall or other structure leading to the ground.

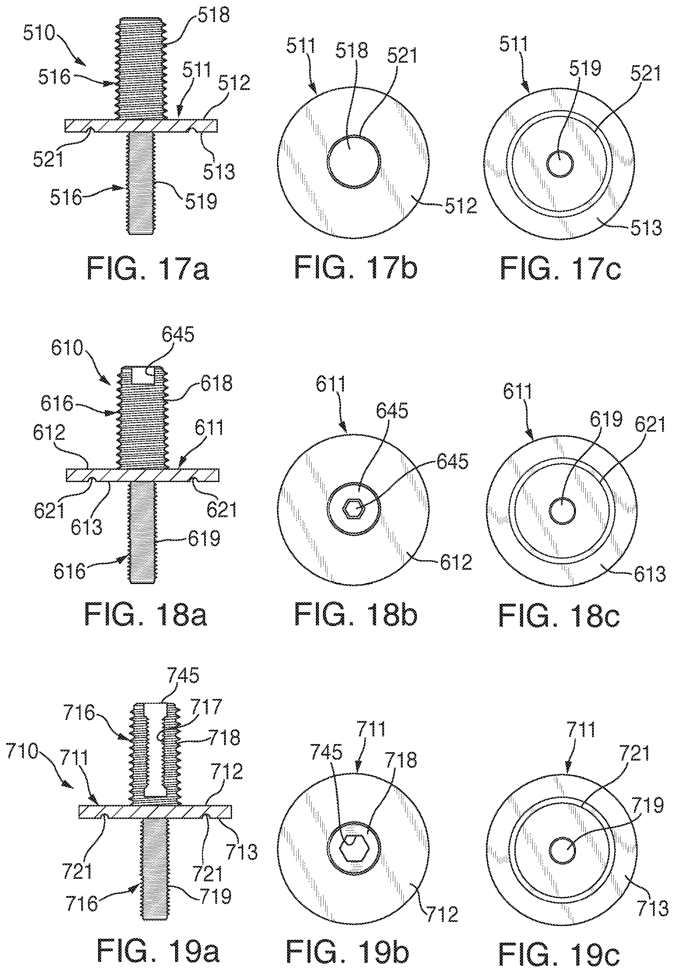

Turning now to FIGS. 17a-c to FIGS. 20a-c, therein illustrated are several more examples of various types of dual post anchors embodying the present invention (see also FIG. 24). In FIGS. 17a-c, the anchor assembly 510 has a dual post 516 composed of an externally threaded, cylindrical upper post 518 and an externally threaded, cylindrical lower post 519 each of which is securely fastened to the base plate 511 via its central throughbore (not shown) but as shown in the previous examples.

In addition, the bottom surface 513 of the circular disk- shaped baseplate 516 is optionally provided with a circular channel or groove 521 for receipt of an adhesive or caulk (not shown) which would normally be applied between the bottom surface 513 of the baseplate 511 and the supporting roof or membrane on which the anchor 510 was supported. In this example, the upper post 518 has a larger diameter than the lower post 519.

The other examples of FIGS. 18-20 have many of the same elements as shown in FIGS. 18a-18c and the elements in each of these four examples are provided with the same reference numerals where applicable except that they are preceded by the numbers 5, 6, 7, 8, respectively, to distinguish between the four examples illustrated. They also have the same general structure and arrangement as set forth and described above in relation to FIGS. 17a-c and therefore only the differences between these different dual post anchors will be described below.

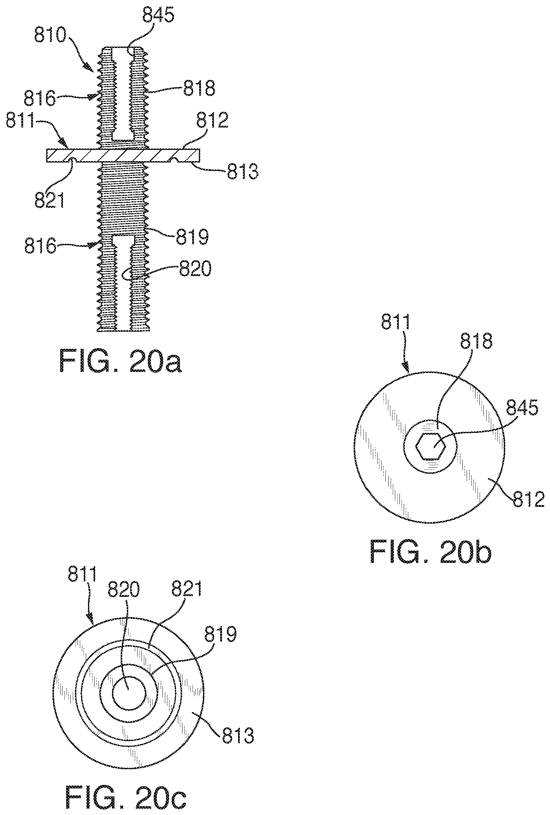

More particularly, FIGS. 18a-18c illustrates a variation of the dual post anchor shown in FIGS. 17a-c but with the added feature of an Allen key port 645 provided in the blind bore 618 of upper port 618 to facilitate turning of the anchor when inserted or removed. FIGS. 19a-19c illustrates a further version of the dual post anchor shown in FIGS. 18a-18c in that the upper post 718 is further provided with a centrally-disposed, axially-extending blind bore 717 beneath the Allen key port 745. FIGS. 20a-20c illustrates another adaptation of the dual post anchor shown in FIGS. 19a-19c wherein the bottom post 819 is also provided with a centrally-disposed, axially- extending blind bore 820 opening onto its lower end. In addition, in this example the cylindrical upper and lower posts 818, 819, respectively, have the same diameter. It should also be noted that the dual posts examples of FIGS. 17a-c through 20a-c, could have smooth posts for situations where it is not possible to bolt the lower post from below the roof.

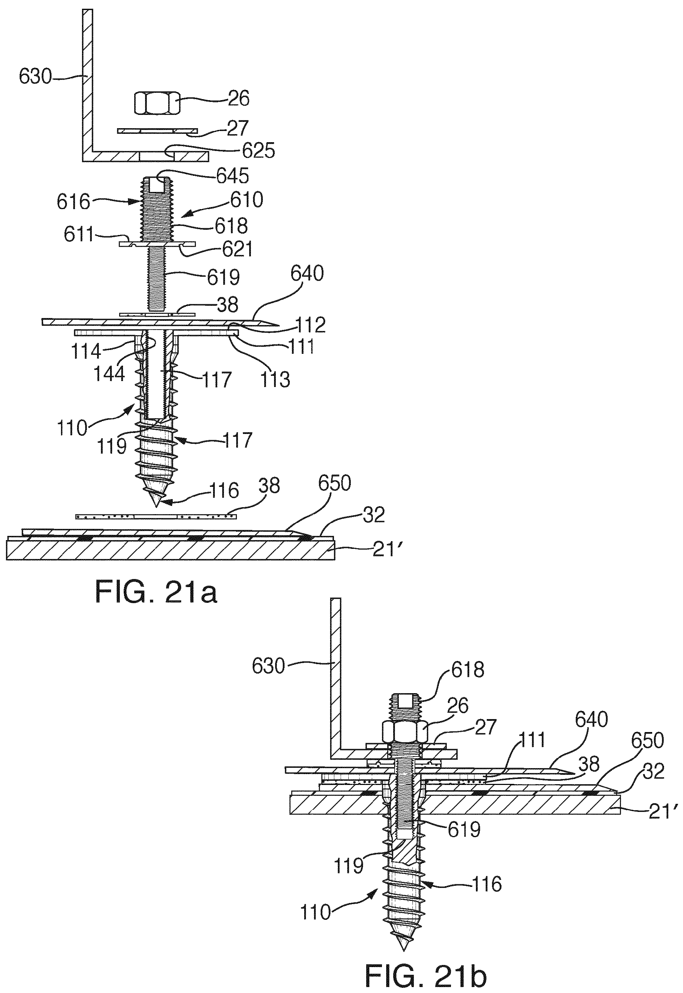

Turning now to FIGS. 21a and 21b, therein illustrated is an example of how the flush anchor of FIG. 8d and the dual post anchor assembly of FIG. 19 a are used in combination to mount an L-shaped solar bracket 630 on a shingled roof having top shingles 640 and bottom shingles 650 mounted on a roof base 21' covered by a rubber membrane 32. As seen best in the exploded view of FIG. 21a, the dual post anchor flange 610 is disposed above of the top shingles 640 and the flush screw anchor 110 is disposed below the top shingles 640. A caulk ring 38 is, in turn, disposed between the lower surface 613 of anchor baseplate 611 and the upper surface 112 of flush anchor 110 so as to better adhere the lower surface of anchor baseplate 611 to top shingles 640 when its lower post 619 is threaded and inserted into the threaded blind bore 117 of flush anchor 110 as seen best in FIG. 21b. The flush screw anchor 110 is, in turn, threaded into the roof membrane 32 and roof base 21', and upon full threaded insertion, its lower anchor baseplate surface 612 will abut the upper surface of the bottom shingles 650 with a caulk ring 38 interposed therebetween. As previously mentioned, the caulk groove 621 on the underside 613 of anchor baseplate 611 serves to better retain the caulk within its groove 621 to ensure a better and waterproof bond to the bottom shingle 650.

As also shown in FIG. 21b, the L-shaped solar bracket support 630 has a throughbore 625 extending through its lower leg which allows the bracket 630 to be received over the upper cylindrical threaded post 618 of dual post anchor baseplate 610. It is, in turn, positioned to abut the upper surface 611 of anchor baseplate 610 and it is held thereagainst by means of nut 26 and washer 27 positioned on the upper side of the lower leg of L-shaped bracket 630. This example is especially advantageous since the flush screw anchor 110 is mounted in the roof such that its baseplate 611 is in effect locked between the top and bottom shingles 640, 650 and this provides an especially strong and rigid anchor for supporting the L-shaped solar bracket 630 which can be easily fastened thereto by means of the dual post anchor assembly 610 with its lower post 619 received within the internally threaded bore 117 of flush anchor 110 and with the washer 27 and nut 26 received on the upper post 618 above the L-shaped support 630 to securely fasten the same to the flush anchor 110.

This example is especially helpful for preventing damage to the upper roof tiles 640, especially where they could be made of fragile ceramic or clay tiles. More particularly, the upper roof tile 640 is sandwiched between the upper face 112 of anchor baseplate 111 and the lower surface 613 of anchor baseplate 610 of dual post anchor assembly 610 by threading the lower post 619 into the threaded blind bore of screw anchor 110 until it abuts the upper roof tile 640 in a snug manner, but without sufficient or undue force that might crack or damage the clay tile. Subsequently, when the solar panel or other heavy accessory is affixed to the L-shaped bracket 630, the load is directly transmitted to the post 619 in screw anchor blind bore 117 and the stable and fixed position of the anchor baseplate 611 above the roof tile 640 serves as a shield or barrier to prevent any crushing or damage thereto. In effect, the stable position of the anchor baseplate 611 and screw anchor baseplate 111 when so threadably joined together at a fixed spacing apart with the roof tile 640 sandwiched therebetween, isolates the roof tile held therebetween from any load placed on the L-shaped bracket 630, dual post anchor 610 and the flush screw anchor 110.

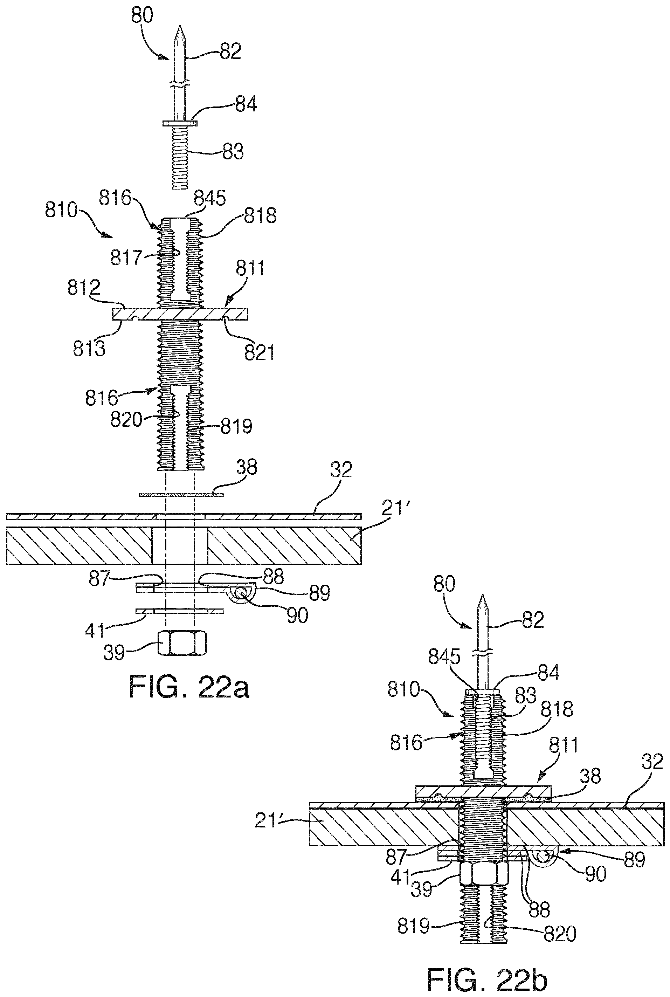

FIGS. 22a and 22b show an exploded and fully mounted view of an example of how the dual post anchor assembly 810 could be used to also mount a lightning rod 80 having a threaded lower section 83 and collar 84. In FIG. 22a the dual post anchor assembly 810 is positioned above a caulk ring 38 which, in return is disposed above the roof membrane 32 and roof 21'. The C-shaped clamping member 89 and the cable 90 are positioned below the roof 21' with a washer 41 and nut 39 therebelow. The lower post 819 of the dual post anchor 810 would be inserted through the caulk ring 38 and the throughbores in the roof membrane 32 and roof 21'. The C-shaped clamp 89 via its throughbores 87 in its legs 88 would be positioned onto the lower end of the post 819 and the washer 41 and nut 39 would be threaded onto the lower post 819 and tightened as needed. The Allen key port 845 could also be used to tighten or loosen the threaded engagement of its lower post 819 with washer 41 and nut 39.

As seen best in FIG. 22b, the threaded lower end 83 of lightning rod 80 would then be threaded into the threaded blind bore 817 of the upper post 818 to thereby mount the lightning rod 80 above the roof 21' and connect it electrically to the clamped grounding cable 90. On the other hand, if it were desired to space the grounding cable 90 from the bottom of the roof 21', a threaded extension rod (not shown) could be threaded into the threaded blind bore 820 of lower post 819 on which a pair of nuts and washers could be mounted to sandwich therebetween the clamping cable 89 and, in turn the grounding cable 90, spaced from the roof 21'. The externally-threaded lower post 819 and its threaded extension rod or internally-threaded bore 820 could also be used to secure or hold other accessory items.

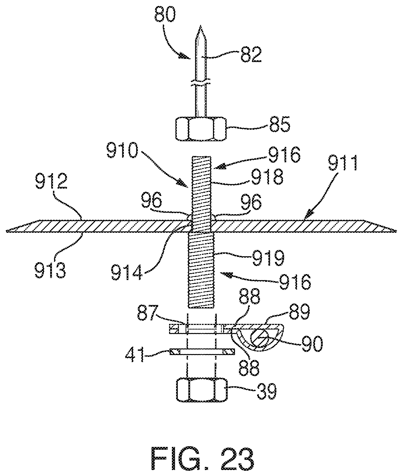

FIG. 23 is an exploded, cross-sectional view of a sixteenth example of the anchor platform assembly 910 pertaining to the present invention. Therein, the anchor baseplate 911 is preferably welded via welds 96 to a dual cylindrical post 916 which has an externally-threaded, cylindrical upper post 918 disposed generally above the baseplate 911 but having a lower end which extends through hole 914 in baseplate 916 so that its lower end lies flush with the bottom surface 913 of baseplate 911. Dual post 916 also has an externally-threaded, cylindrical lower post 919 having an upper end affixed to the lower end of the upper post 918 and a lower end intended to extend below the anchor plate 911 and roof 21' (not shown). As shown, the dual posts 918, 919 are prefabricated as one piece and comprise posts of different diameters. This is typically accomplished by starting with a metallic cylindrical rod having a diameter of the largest intended diameter of the dual posts, in this case post 919, and turning an upper portion of the rod of the same intended length of post 918 on a lathe or the like, to reduce the diameter of the upper portion so that it matches the intended diameter of the lower post 919. As a result, the smaller diameter section or post 918 forms a neck where it merges with the top end of the larger diameter post 919 which abuts the bottom surface of anchor baseplate 913 at the bottom of throughbore 914.

As exemplified in FIG. 23, as a result the cylindrical lower post 219 has a larger diameter than the upper post 218. The dual post 216 is joined to the anchor baseplate 211 via its through hole 214 in the same manner as the externally-threaded posts with a reduced neck section 35, 135 in several of the earlier examples, such as FIG. 7b. More particularly, the one-piece dual post 916 comprises of upper post 918 and lower post 919 create at their point of connection a reduced or narrow neck section having a diameter slightly smaller than throughbore 914 in baseplate 911 while the lower post 919 has a larger diameter so that its top end serves as a "shoulder" to the "neck portion" that butts up against the bottom surface 913 of baseplate 911. Thus, here too, this configuration creates a strong, rigid joint and an easily replicated and exact 90° alignment of the baseplate 911 and dual post 916.

As further shown in FIG. 23, a lightning rod 80 having a pointed shaft 82 is attached to a lower, internally-threaded nut 85 which, in turn, is threadably secured on the externally-threaded upper post 918. Here too, a clamp 89 is used to clamp a grounding cable 90 and is receivable on threaded lower post 919 and held thereon by nut 39 and washer 41 against the lower surface of the roof 21' (not shown). When fully mounted on a support structure, such as a roof 21' as shown in FIGS. 10a and 10b, it too, would be installed with flashing materials, fasteners and/or adhesives as previously described herein.

While the foregoing specifically describes and illustrates the use of the anchor baseplate and screw anchor assemblies shown in use with, glass rails, lightning rods, grounding cables and L-shaped brackets for solar panels, they can also be used for anchoring and supporting a wide variety of other objects to support structures, such as roof or other building accessories, e.g., antennas, TV satellite dishes, HVAC units and the like.

As briefly touched upon in the discussion of FIG. 4a, it is important to use cylindrical mechanical fasteners having a "straight" thread for mounting an object on a support structure via the internally-threaded cylindrical blind bore of the various examples described herein. More specifically, mechanical fasteners of this type have a so-called "straight" thread - namely bolts with heads and cylindrical threaded shafts and cylindrical rodshaped studs which are headless. This is to be distinguished from a "cone-shaped" screw which has a so-called "tapered" thread. The use of such a cylindrical bolt or stud fastener with a straight thread ensures a strong joint and the versatility of accommodating fasteners of varying lengths and widths for achieving various degrees of holding power via threaded receipt in the internally-threaded, cylindrical blind bores of the posts which also have a straight edge. In contrast, the mechanical fasteners used to affix the anchor baseplate to a support via ancillary holes 15 may generally be of any type including screws with a "tapered" thread.

As can also be appreciated from the foregoing, the shape and the number of anchor baseplates, the shape, type and number of posts, whether externally-threaded or smooth, the use of non-threaded throughbores, threaded blind bores, and the placement thereof can also be modified depending upon the specific details of the particular application such as the nature, size and material of the roof or other building support structures, such as metal, wood or some other composite. For example, a preferred range of the length or height of the posts may be anywhere from 0 cm (0 inches) (flush) to 46 cm (18 inches). Similarly, it is anticipated that the types of fasteners, membranes flashing materials and sealants will also be chosen to be compatible with the roof or building structure. Also, the elements of the various examples may be substituted for one another where appropriate.

In addition, although the screw anchors aside from the raised hex head screw anchor, preferably employ a screw slot or an Allen key port to secure or remove the anchor to a support structure, with a flat head screwdriver or Allen key port. Other means, such as a star bit etc., could instead be used to assist the user in screwing in and/or removing the anchor to, or from, a building support.

It should also be noted that the dimensions of the various parts and elements can be varied as needed or preferred. For example, the upper and lower posts of cylindrical dual posts typically have diameters and are preferably in a range of 0.32 cm (1/8") to 5.1 cm (2"). For example, one post could have a width of 1.3 cm (½") while the other post could have a width of 1.9 cm (¾"), or they could have the same width. Of course, the diameter of the upper and lower sections can be larger or smaller relative to one another, as desired. The nut is preferably between 1.3 cm (½") and 7.6 cm (3"), but a typical standard size may be 1.9 cm (¾"). The thickness of the baseplate may be varied according to need, for example, preferably between 0.16 cm (1/16") to 2.5 cm (1"), but preferably 0.64 cm (1/4"). Bolts with attached nuts, or bolts with separate nuts are usable and may be used interchangeably herein. In a preferred example, the post has an external diameter of 1.3 cm (½") and its internal bore has a diameter of 0.95 cm (3/8"). The screw anchor may have a width or thickness of about 0.16 cm (1/16") and a diameter of about 3.8 cm (1½"). However, as mentioned above, the dimensions of the baseplate flange and bores can vary as well as the length of the posts and their internal bores.

The materials of the components of the anchor assemblies, such as the baseplates and posts can also be made of a variety of materials, including, e.g., metals such as stainless steel, aluminum, bronze, copper, plastic or composite materials. It is also preferred that the baseplate and its post and the screw anchors and their flanges are integrally formed as a one-piece component. However, it can be appreciated that the posts can be secured to the baseplate via welding or other means.

Accordingly, while particular examples of the invention have been described, it is not intended that the invention be limited thereto, as it is intended that the invention is defined by the claims. It will therefore be appreciated by those skilled in the art that other modifications could be made thereto without departing from the scope of the invention as defined by the claims.

## Claims

1. An anchor platform assembly (310, 510, 610, 710, 910) for anchoring an object to a structure, comprising:
an anchor baseplate (311, 511, 611, 711, 911) having a generally planar first surface (312, 512, 612, 712, 912) and second surface (313, 513, 613, 713, 913), two cylindrical posts (318, 319, 518, 519, 618, 619, 718, 719, 918, 919), each have a first end directly secured to said anchor baseplate (311, 511, 611, 711, 911) with said first ends thereof secured to each other as one piece, and with at least one of said posts (318, 319, 518, 519, 618, 619, 718, 719, 918, 919) extending into a throughbore (914) in said anchor baseplate (311, 511, 611, 711, 911) so that said two posts (318, 319, 518, 519, 618, 619, 718, 719, 918, 919) are in axial alignment and registry with said anchor baseplate throughbore (914) and extend perpendicularly outwardly from said anchor baseplate (311, 511, 611, 711, 911), said posts (318, 319, 518, 519, 618, 619, 718, 719, 918, 919) each having a second free end and wherein said second surface (313, 513, 613, 713, 913) of said anchor baseplate (311, 511, 611, 711, 911) is configured to allow the structure to lie generally flush against said second surface (313, 513, 613, 713, 913) except for an area of said second surface (313, 513, 613, 713, 913) covered by said post (319, 519, 619, 719, 919); and
means (83, 85) for fastening an object (80) to said anchor baseplate (311, 511, 611, 711, 911) via at least one of said posts (318, 319, 518, 519, 618, 619, 718, 719, 918, 919) comprising a cylindrical mechanical fastener (83, 85) having a straight thread;
wherein said two posts (318, 319, 518, 519, 618, 619, 718, 719, 918, 919) have different diameters.

2. An assembly (310, 510, 610, 710, 910) according to Claim 1, wherein said at least one of said posts (318, 319, 518, 519, 618, 619, 718, 719, 918, 919) is externally-threaded.

3. An assembly (310, 510, 610, 710, 910) according to Claim 1, wherein both of said posts (318, 319, 518, 519, 618, 619, 718, 719, 918, 919) are externally-threaded.

4. The assembly (310, 510, 610, 710, 910) according to Claim 1, wherein said at least one post (318, 319, 518, 519, 618, 619, 718, 719, 918, 919) comprises an at least partially threaded cylindrical stud (318, 319, 518, 519, 618, 619, 718, 719, 918, 919) having a straight edge.

5. The assembly (310, 710) according to Claim 1, wherein at least one of said posts (318, 319, 718, 719) has an at least partially threaded cylindrical blind bore (317, 320, 717) formed therein opening onto said free second end thereof.

6. The assembly (710) according to Claim 5, wherein said blind bore (717) has a longitudinally-extended axis and said assembly additionally includes means (745) for rotating said anchor (710) about said axis of said blind bore (717).

7. The assembly (710) according to Claim 6, wherein said means (745) for rotating comprises a port (745) formed adjacent to and within said open top end of said blind bore (717).

8. The assembly (710) according to Claim 7, wherein said port (745) is configured and dimensioned as a flat head screw slot.

9. The assembly (710) according to Claim 7, wherein said port (745) is configured and dimensioned as an Allen key port.

10. The assembly (310, 510, 610, 710, 910) according to Claim 1, additionally including means (83, 85) for fastening an object (80) to at least one of said posts (318, 319, 518, 519, 618, 619, 718, 719, 918, 919).

11. The assembly (610) according to Claim 2, additionally including an L-shaped support (630) for a solar panel having a throughhole (625) which is receivable on one of said posts (618).

12. The assembly (610) according to Claim 11, additionally including a nut (26) receivable on said externally threaded post (618) to clamp said L-shaped (630) support against the anchor baseplate (611).

13. The assembly (310) according to Claim 5, wherein both of said posts (318, 319) has an at least partially threaded cylindrical blind bore (317, 320) formed therein opening onto said free second ends thereof.

14. The assembly (510, 610, 710) according to Claim 1, wherein said anchor baseplate (511, 611, 711) has a channel (521, 621, 721) formed on at least one side thereof for receipt therein of an adhesive.

15. The assembly (510, 610, 710) according to Claim 14, wherein said channel (521, 621, 721) is circular and is spaced outwardly of said throughbore in said anchor baseplate (511, 611, 711).

16. The assembly (310) according to Claim 5, additionally including a lightning rod (80) serving as an object and said lightning rod (80) has a lower end (83), and said means (83) for fastening an object is provided on said lower end (83) which is threadably receivable in said blind bore (317).

17. The assembly (310, 910) according to Claim 2, additionally including a clamp (89) for a grounding cable (90) and said clamp (89) is threadably receivable on said externally threaded post (319, 919).

## Patentansprüche

1. Ankerplattenanordnung (310, 510, 610, 710, 910) zum Verankern eines Objekts an einer Struktur, umfassend:
eine Ankergrundplatte (311, 511, 611, 711, 911) mit einer im Allgemeinen ebenen ersten Oberfläche (312, 512, 612, 712, 912) und einer zweiten Oberfläche (313, 513, 613, 713, 913), zwei zylindrischen Pfosten (318, 319, 518, 519, 618, 619, 718, 719, 918, 919), die jeweils ein erstes Ende aufweisen, das direkt an der Ankergrundplatte (311, 511, 611, 711, 911) fixiert ist, wobei die ersten Enden davon als ein Stück aneinander fixiert sind und wobei sich mindestens einer der Pfosten (318, 319, 518, 519, 618, 619, 718, 719, 918, 919) in eine Durchgangsbohrung (914) in der Ankergrundplatte (311, 511, 611, 711, 911) erstreckt, sodass die zwei Pfosten (318, 319, 518, 519, 618, 619, 718, 719, 918, 919) in axialer Ausrichtung und Deckung mit der Ankergrundplattendurchgangsbohrung (914) sind und sich senkrecht von der Ankergrundplatte (311, 511, 611, 711, 911) nach außen erstrecken, wobei die Pfosten (318, 319, 518, 519, 618, 619, 718, 719, 918, 919) jeweils ein zweites freies Ende aufweisen und wobei die zweite Oberfläche (313, 513, 613, 713, 913) der Ankergrundplatte (311, 511, 611, 711, 911) dazu konfiguriert ist, zu ermöglichen, dass die Struktur im Allgemeinen bündig an der zweiten Oberfläche (313, 513, 613, 713, 913) liegt, mit Ausnahme eines Bereichs der zweiten Oberfläche (313, 513, 613, 713, 913), der durch den Pfosten (319, 519, 619, 719, 919) bedeckt ist; und
eine Einrichtung (83, 85) zum Befestigen eines Objekts (80) an der Ankergrundplatte (311, 511, 611, 711, 911) mittels mindestens eines der Pfosten (318, 319, 518, 519, 618, 619, 718, 719, 918, 919), die ein zylindrisches mechanisches Befestigungsmittel (83, 85) mit einem geraden Gewinde umfasst;
wobei die zwei Pfosten (318, 319, 518, 519, 618, 619, 718, 719, 918, 919) unterschiedliche Durchmesser aufweisen.

2. Anordnung (310, 510, 610, 710, 910) nach Anspruch 1, wobei der mindestens eine der Pfosten (318, 319, 518, 519, 618, 619, 718, 719, 918, 919) mit einem Außengewinde versehen ist.

3. Anordnung (310, 510, 610, 710, 910) nach Anspruch 1, wobei beide Pfosten (318, 319, 518, 519, 618, 619, 718, 719, 918, 919) mit einem Außengewinde versehen sind.

4. Anordnung (310, 510, 610, 710, 910) nach Anspruch 1, wobei der mindestens eine Pfosten (318, 319, 518, 519, 618, 619, 718, 719, 918, 919) einen mindestens teilweise mit einem Gewinde versehenen zylindrischen Zapfen (318, 319, 518, 519, 618, 619, 718, 719, 918, 919) mit einer geraden Kante umfasst.

5. Anordnung (310, 710) nach Anspruch 1, wobei mindestens einer der Pfosten (318, 319, 718, 719) eine mindestens teilweise mit einem Gewinde versehene zylindrische Sackbohrung (317, 320, 717) aufweist, die darin ausgebildet ist und die sich zu dem freien zweiten Ende davon hin öffnet.

6. Anordnung (710) nach Anspruch 5, wobei die Sackbohrung (717) eine sich längs erstreckende Achse aufweist und die Anordnung zusätzlich eine Einrichtung (745) zum Drehen des Ankers (710) um die Achse der Sackbohrung (717) enthält.

7. Anordnung (710) nach Anspruch 6, wobei die Einrichtung (745) zum Drehen einen Schlitz (745) umfasst, die benachbart zu dem und innerhalb des offenen oberen Endes der Sackbohrung (717) ausgebildet ist.

8. Anordnung (710) nach Anspruch 7, wobei der Schlitz (745) als ein Flachkopfschraubenspalt konfiguriert und dimensioniert ist.

9. Anordnung (710) nach Anspruch 7, wobei der Schlitz (745) als ein Innensechskantschlüsselschlitz konfiguriert und dimensioniert ist.

10. Anordnung (310, 510, 610, 710, 910) nach Anspruch 1, zusätzlich enthaltend eine Einrichtung (83, 85) zum Befestigen eines Objekts (80) an mindestens einem der Pfosten (318, 319, 518, 519, 618, 619, 718, 719, 918, 919).

11. Anordnung (610) nach Anspruch 2, zusätzlich eine L-förmige Stütze (630) für ein Solarpaneel mit einem Durchgangsloch (625) enthaltend, das an einem der Pfosten (618) aufnehmbar ist.

12. Anordnung (610) nach Anspruch 11, zusätzlich enthaltend eine Mutter (26), die an dem Außengewindepfosten (618) aufnehmbar ist, um die L-förmige (630) Stütze gegen die Ankergrundplatte (611) zu klemmen.

13. Anordnung (310) nach Anspruch 5, wobei beide Pfosten (318, 319) eine mindestens teilweise mit einem Gewinde versehene zylindrische Sackbohrung (317, 320) aufweist, die darin ausgebildet ist und die sich zu den freien zweiten Enden davon hin öffnet.

14. Anordnung (510, 610, 710) nach Anspruch 1, wobei die Ankergrundplatte (511, 611, 711) einen Kanal (521, 621, 721) aufweist, der auf mindestens einer Seite davon zur Aufnahme eines Klebstoffs darin ausgebildet ist.

15. Anordnung (510, 610, 710) nach Anspruch 14, wobei der Kanal (521, 621, 721) kreisförmig ist und von der Durchgangsbohrung in der Ankergrundplatte (511, 611, 711) nach außen beabstandet ist.

16. Anordnung (310) nach Anspruch 5, zusätzlich enthaltend einen Blitzableiter (80), der als ein Objekt dient, und der Blitzableiter (80) ein unteres Ende (83) aufweist, und die Einrichtung (83) zum Befestigen eines Objekts an dem unteren Ende (83) bereitgestellt ist, das schraubbar in der Sackbohrung (317) aufnehmbar ist.

17. Anordnung (310, 910) nach Anspruch 2, zusätzlich enthaltend eine Klemme (89) für ein Erdungskabel (90) und die Klemme (89) an dem Außengewindepfosten (319, 919) schraubbar aufnehmbar ist.

## Revendications

1. Ensemble plate-forme d'ancrage (310, 510, 610, 710, 910) destiné à ancrer un objet à une structure, comprenant :
une plaque de base d'ancrage (311, 511, 611, 711, 911) présentant une première surface généralement plane (312, 512, 612, 712, 912) et une seconde surface (313, 513, 613, 713, 913), deux montants cylindriques (318, 319, 518, 519, 618, 619, 718, 719, 918, 919), chacun présentant une première extrémité directement fixée à ladite plaque de base d'ancrage (311, 511, 611, 711, 911), lesdites premières extrémités de celle-ci étant fixées l'une à l'autre en une seule pièce, et au moins l'un desdits montants (318, 319, 518, 519, 618, 619, 718, 719, 918, 919) s'étendant dans un alésage traversant (914) de ladite plaque de base d'ancrage (311, 511, 611, 711, 911) afin que lesdits deux montants (318, 319, 518, 519, 618, 619, 718, 719, 918, 919) soient en alignement axial et coïncident avec ledit alésage traversant (914) de plaque de base d'ancrage et s'étendent perpendiculairement vers l'extérieur à partir de ladite plaque de base d'ancrage (311, 511, 611, 711, 911), lesdits montants (318, 319, 518, 519, 618, 619, 718, 719, 918, 919) présentant chacun une seconde extrémité libre et dans lequel ladite seconde surface (313, 513, 613, 713, 913) de ladite plaque de base d'ancrage (311, 511, 611, 711, 911) est conçue pour permettre à la structure de se trouver globalement à fleur de ladite seconde surface (313, 513, 613, 713, 913), à l'exception d'une zone de ladite seconde surface (313, 513, 613, 713, 913) couverte par ledit montant (319, 519, 619, 719, 919) ; et
un moyen (83, 85) de fixation d'un objet (80) à ladite plaque de base d'ancrage (311, 511, 611, 711, 911) par l'intermédiaire d'au moins l'un desdits montants (318, 319, 518, 519, 618, 619, 718, 719, 918, 919) comprenant une fixation mécanique cylindrique (83, 85) présentant un filetage droit ;
dans lequel lesdits deux montants (318, 319, 518, 519, 618, 619, 718, 719, 918, 919) présentent des diamètres différents.

2. Ensemble (310, 510, 610, 710, 910) selon la revendication 1, dans lequel ledit au moins un desdits montants (318, 319, 518, 519, 618, 619, 718, 719, 918, 919) est fileté extérieurement.

3. Ensemble (310, 510, 610, 710, 910) selon la revendication 1, dans lequel les deux desdits montants (318, 319, 518, 519, 618, 619, 718, 719, 918, 919) sont filetés extérieurement.

4. Ensemble (310, 510, 610, 710, 910) selon la revendication 1, dans lequel ledit au moins un montant (318, 319, 518, 519, 618, 619, 718, 719, 918, 919) comprend un goujon cylindrique au moins partiellement fileté (318, 319, 518, 519, 618, 619, 718, 719, 918, 919) présentant un bord droit.

5. Ensemble (310, 710) selon la revendication 1, dans lequel au moins l'un desdits montants (318, 319, 718, 719) présente un alésage borgne cylindrique au moins partiellement fileté (317, 320, 717) formé dans celui-ci s'ouvrant sur ladite seconde extrémité libre de celui-ci.

6. Ensemble (710) selon la revendication 5, dans lequel l'alésage borgne (717) présente un axe longitudinal et ledit ensemble comprend également un moyen (745) de rotation dudit ancrage (710) autour dudit axe dudit alésage borgne (717).

7. Ensemble (710) selon la revendication 6, dans lequel ledit moyen (745) de rotation comprend un orifice (745) formé adjacent à ladite extrémité supérieure ouverte dudit alésage borgne (717) et au sein de celle-ci.

8. Ensemble (710) selon la revendication 7, dans lequel ledit orifice (745) est conçu et dimensionné comme une fente de vis à tête plate.

9. Ensemble (710) selon la revendication 7, dans lequel ledit orifice (745) est conçu et dimensionné comme un orifice de clé Allen.

10. Ensemble (310, 510, 610, 710, 910) selon la revendication 1, comprenant en outre un moyen (83, 85) de fixation d'un objet (80) à au moins un desdits montants (318, 319, 518, 519, 618, 619, 718, 719, 918, 919).

11. Ensemble (610) selon la revendication 2, comprenant en outre un support en forme de L (630) pour un panneau solaire présentant un trou traversant (625) qui peut être reçu sur l'un desdits montants (618).

12. Ensemble (610) selon la revendication 11, comprenant en outre un écrou (26) pouvant être reçu sur ledit montant fileté extérieurement (618) pour serrer ledit support en forme de L (630) contre la plaque de base d'ancrage (611).

13. Ensemble (310) selon la revendication 5, dans lequel les deux desdits montants (318, 319) présentent un alésage borgne cylindrique au moins partiellement fileté (317, 320) formé dans ceux-ci s'ouvrant sur lesdites secondes extrémités libres de ceux-ci.

14. Ensemble (510, 610, 710) selon la revendication 1, dans lequel ladite plaque de base d'ancrage (511, 611, 711) présente un canal (521, 621, 721) formé d'au moins un côté de celle-ci pour recevoir un adhésif dans celui-ci.

15. Ensemble (510, 610, 710) selon la revendication 14, dans lequel ledit canal (521, 621, 721) est circulaire et est espacé vers l'extérieur dudit alésage traversant dans ladite plaque de base d'ancrage (511, 611, 711).

16. Ensemble (310) selon la revendication 5, comprenant également un paratonnerre (80) servant d'objet et ledit paratonnerre (80) présente une extrémité inférieure (83), et ledit moyen (83) de fixation d'un objet est prévu sur ladite extrémité inférieure (83) qui peut être reçue par filetage dans ledit alésage borgne (317).

17. Ensemble (310, 910) selon la revendication 2, comprenant en outre un dispositif de serrage (89) pour un câble de mise à la terre (90) et ledit dispositif de serrage (89) peut être reçu par filetage sur ledit montant fileté extérieurement (319, 919).
